# EUROPÄISCHE PATENTSCHRIFT

(11) **EP 3 284 685 B1**
(45) Veröffentlichungstag und Bekanntmachung des Hinweises auf die Patenterteilung: **27.03.2019**
(21) Anmeldenummer: 17186087.7
(22) Anmeldetag: 14.08.2017
(51) Int. Cl.: B65B 33/00, B60B 7/00, B65B 33/02, B60B 7/06, B65C 9/12

(54) **APPLIKATOR ZUR HANDHABUNG VON FELGENSCHUTZFILMEN**
APPLICATOR FOR HANDLING OF RIM PROTECTION FILMS
APPLICATEUR DESTINÉ À LA MANIPULATION DES FILMS PROTECTEURS DES JANTES

(30) Priorität: 15.08.2016 DE 102016215140
(43) Veröffentlichungstag der Anmeldung: 21.02.2018
(73) Patentinhaber: tesa SE, 22848 Norderstedt (DE)
(72) Erfinder: RUBENBAUER, Ralf, 22527 Hamburg (DE); BRANDT, Hans-Peter, 22869 Schenefeld (DE)

(56) Entgegenhaltungen:
- US-A1- 2004 065 414
- US-A1- 2014 090 775
- US-A1- 2014 290 844

## Beschreibung

Die Erfindung betrifft ein Felgenschutzapplikationsset und ein Verfahren zum Aufbringen eines Felgenschutzfilmes auf eine Felge.

Felgenschutzfilme werden gemäß dem Stand der Technik meist manuell gehandhabt. Felgenschutzfilme sind dazu gestapelt bevorratet. Die Stapel an Felgenschutzfilmen werden in einer Verpackung oder einer Schweißfolie zur Verfügung gestellt. Nach dem Aufreißen der Schweißfolie oder Öffnen der Verpackung kann der oberste Felgenschutzfilm aus der Verpackung entnommen werden und auf eine Felge aufgeklebt werden. Der Felgenschutzfilm weist üblicherweise eine Trägerfolie und auf einer Seite der Trägerfolie eine Klebschicht auf. Die Klebschicht ist im Verpackungszustand des Felgenschutzfilmes in der Regel mit einem Schutzfilm vollflächig abgedeckt, so dass die mit dem Schutzfilm versehenen Felgenschutzfilme übereinandergestapelt werden können, ohne dass die Felgenschutzfilme miteinander verklebt werden.

Es hat sich gezeigt, dass das manuelle Handhaben der Felgenschutzfilme umständlich ist.

Aus der US 2014/090775 A1 ist ein Felgenschutzfilmapplikationsset mit einer übereinandergestapelten Vielzahl an formgleichen Felgenschutzfilmen mit jeweils einem ersten Außenumfang und einem Applikator bekannt. Dieser ist aus einem ebenen Verpackungszustand in einen Applizierzustand aufklappbar und bildet in dem Verpackungszustand ein scheibenförmiges Schnittmuster mit einem zweiten Außenumfang aus. Weiterhin weist dieser im Applizierzustand eine Auflagefläche auf, deren zweiter Außenumfang dem ersten Außenumfang des Felgenschutzfilms angepasst ist.

Die US 2004/065414 A1 offenbart einVerfahren zum Aufbringen eines Felgenschutzfilms auf eine Felge, indem ein Applikator auf einen obersten Felgenschutzfilm eines Stapels aus Felgenschutzfilmen aufgedrückt wird, der oberste Felgenschutzfilm) des Stapels abgehoben wird, der Felgenschutzfilm mithilfe des Applikators auf eine Felge aufgeklebt wird und der Applikator nach dem Aufkleben des Felgenschutzfilms von dem Felgenschutzfilm gelöst wird.

Es ist daher in einem ersten Aspekt Aufgabe der Erfindung, ein Felgenschutzfilmapplikationsset zur Verfügung zu stellen, dass die Handhabung der Felgenschutzfilme, insbesondere das Aufbringen der Felgenschutzfilme auf eine Felge, erleichtert.

Es ist in einem zweiten Aspekt Aufgabe der vorliegenden Erfindung, ein einfacheres Verfahren zum Aufbringen eines Felgenschutzfilmes zur Verfügung zu stellen.

Die Aufgabe wird in ihrem ersten Aspekt durch ein Felgenschutzapplikationsset mit den Merkmalen des Anspruchs 1 erfüllt.

Das erfindungsgemäße Felgenschutzapplikationsset weist zum einen eine übereinandergestapelte Vielzahl von formgleichen Felgenschutzfilmen mit jeweils einem ersten Außenumfang auf. Vorzugsweise sind die Felgenschutzfilme sowohl in ihrem Außenumfang und dessen Form als auch in ihren in sie eingebrachten Anordnungen von Löchern, Einritzungen, Einschneidungen usw. formgleich, d. h. vollständig identisch ausgebildet.

Zum anderen weist das Felgenschutzapplikationsset einen Applikator auf, der aus einem ebenen Verpackungszustand in einen Applizierzustand aufklappbar ist und der in dem Verpackungszustand ein scheibenförmiges Schnittmuster mit einem zweiten Außenumfang ausbildet und im Applizierzustand zumindest einen aus dem Schnittmuster herausgeklappten Griff aufweist und eine Auflagefläche aufweist, deren zweiter Außenumfang dem ersten Außenumfang des Felgenschutzfilmes angepasst ist. Vorzugsweise sind der erste und der zweite Außenumfang formgleich. Dadurch kann der Applikator flächig auf den Felgenschutzfilm und der Felgenschutzfilm flächig auf die Felge gedrückt werden und dennoch ein materialarmer Applikator zur Verfügung gestellt werden.

Unter flächigem Aufdrücken wird hier verstanden, dass der Applikator den felgenschutzfilm möglichst eben aufnimmt, ohne dass sich der Felgenschutzfilm wellt oder knickt. Dennoch kann der Applikator an nur einigen Bereichen mit dem Felgenschutzfilm direkt in Berührung stehen.

Ebenso wird der Felgenschutzfilm flächig auf die Felge gedrückt derart, dass möglichst große Bereiche des Felgenschutzfilmes mit der Felge unmittelbar in Berührung stehen.

Das erfindungsgemäße Felgenschutzapplikationsset stellt somit einen Applikator zur Verfügung, der es ermöglicht, nacheinander von dem Stapel der Felgenschutzfilme den jeweils obersten Felgenschutzfilm abzuheben und gezielt und positionsgenau auf eine Felge aufzubringen.

Der erfindungsgemäße Applikator ist darüber hinaus aus einem Verpackungszustand, in dem er eine dünne und flächige, also ebene Ausbildung aufweist, in einen Applizierzustand, in dem er an wenigstens einem Griff handhabbar ist und eine gegenüber dem Verpackungszustand deutlich höhere Bauhöhe aufweist, aufklappbar.

Vorzugsweise ist einem Verpackungsset jeweils ein Applikator zugeordnet, der so ausgelegt ist, dass er zum Aufbringen der bestimmten Vielzahl der Folienschutzfilme des Sets geeignet ist. Üblicherweise umfasst ein Set etwa 200 Felgenschutzfilme; es kann jedoch auch eine höhere oder geringere Anzahl an Felgenschutzfilmen vorgesehen sein. Grundsätzlich ist jede Anzahl von Felgenschutzfilmen als Teil eines Sets denkbar. Obwohl der Applikator zum Nacheinanderaufbringen der Vielzahl an Felgenschutzfilmen bestimmt ist, würde man einen solchen Applikator dennoch als Einwegapplikator bezeichnen, da seine Anwendung auf die Vielzahl eines Sets beschränkt ist und der Applikator mit der Vielzahl eines Sets zur Verfügung gestellt wird.

Günstigerweise weist das scheibenförmige Schnittmuster einen kreisförmigen zweiten Außenumfang sowie zwei sich an einem Kreismittelpunkt des Schnittmusters gegenüberliegende, zueinanderklappbare Griffe auf. Sowohl erster als auch zweiter Außenumfang sind günstigerweise kreisförmig ausgebildet, da die Felgenschutzfilme der Form der Felgen angepasst sind und diese in ihrem Außenumfang üblicherweise kreisrund ausgebildet sind. Die Außenform der Felgenschutzfilme bestimmt mit ihrem ersten Außenumfang auch die Form des zweiten Außenumfanges, also den Außenumfang des Applikators.

Unter einem scheibenförmigen Schnittmuster ist hier zunächst ein scheibenförmiges Element zu verstehen, das aus Pappe, Wellpappe, aber auch aus einer dünnen Kunststoffscheibe, beispielsweise einer dünnen Kunststoffdoppelstegplatte mit Dicken von wenigen Millimetern, vorzugsweise 0,5 cm, bestehen kann. Aus diesem scheibenförmigen Element wird ein Schnittmuster günstigerweise ausgestanzt oder ausgeschnitten. Unabhängig von der Art der Herstellung des Schnittmusters durch Stanzen, Schneiden, Schweißen, Trennen usw. werden diese einheitlich als Schnittmuster bezeichnet.

Das Schnittmuster ist scheibenförmig und einlagig ausgebildet und aus diesem scheibenförmigen bzw. einlagigen Schnittmuster kann durch Herausklappen von Einzelbereichen, insbesondere dem wenigsten einen Griff, günstigerweise zwei Griffen, ein Applikator in einem Applizierzustand hergestellt werden, der manuell mit einer Hand des Benutzers auch handhabbar ist.

Vorzugsweise weist die Auflagefläche einen kreisförmigen zweiten Außenumfang auf und auf der Auflagefläche ist entlang des zweiten Außenumfangs wenigstens eine Klebfläche angeordnet. Die Klebfläche kann als schmaler Streifen entlang der Auflagefläche des Applikators als Ring vorgesehen sein. Die Klebfläche kann auch mehrflächig sein, ein, zwei, drei oder jede höhere Anzahl an einzelnen Klebflächen aufweisen. Günstigerweise sind die Klebflächen in Form eines Zifferblattes entlang des Außenumfangs der Auflagefläche vorgesehen.

Besonders bevorzugt ist die wenigstens eine Klebfläche außen an einem Schaumstoffstück angeordnet, das auf die Auflagefläche aufgebracht ist, vorzugsweise selbst aufgeklebt ist. Die Klebflächen werden so durch zweiseitig klebbare Schaumstoffstücke ausgebildet, die jeweils auf die Auflagefläche aufgeklebt werden.

Statt oder zusätzlich zu einem oder mehreren Schaumstoffstücken können in der Auflagefläche Konturen vorgestanzt sein, die aufgefaltet werden können. Nach dem Auffalten entsteht ein Körper, an dessen Außenfläche wenigstens eine Klebfläche vorgesehen sein kann. Der Körper selbst kann durch Kleber oder einen Klebebandstreifen auf der Auflagefläche fixiert werden, womit ein Entfalten verhindert wird.
Besonders bevorzugt sind die Konturen so gestanzt, dass die Körper in radialer Richtung aufgefaltet werden, so dass die Körper ebenfalls in Form eines Zifferblattes entlang des Außenumfangs der Auflagefläche entstehen.

Im Verpackungszustand sind die Klebflächen vorzugsweise mit einer zweiten Schutzfolie abgedeckt, so dass der Applikator im Verpackungszustand auch ohne zu verkleben auf den obersten Felgenschutzfilm des Stapels aufgelegt werden kann.

Des Weiteren weisen die Felgenschutzfilme einen kreisförmigen ersten Außenumfang auf und eine Klebseite, die jeweils von einer ersten Schutzfolie abgedeckt ist, wenn die Felgenschutzfilme in ihrem Verpackungszustand sind, also beispielsweise übereinandergestapelt sind.

Die Felgenschutzfilme sind günstigerweise aus einer Trägerfolie ausgebildet, deren eine Seite mit einer Klebschicht versehen ist. Auf die der Trägerfolie abgewandten Seite der Klebschicht ist dann jeweils eine erste Schutzfolie aufgebracht. Der Felgenschutzfilm weist als Film in einer zweidimensionalen Filmebene Abmessungen auf, die um das Vielfache höher sind als eine Ausdehnung entlang der Höhe des Filmes. Die Abmessungen in der Ebene des Felgenschutzfilmes entsprechen dem Durchmesser der Felge und tragen also einige Dezimeter bis zu einem halben Meter, es können auch größere Durchmesser vorgesehen sein, während die Höhe oder Dicke des Felgenschutzfilmes, also die Ausdehnung entlang der Höhe, im Bereich von Mikrometern bis zu wenigen Millimetern liegen kann.

Vorzugsweise sind die Felgenschutzfilme im Verpackungszustand übereinandergestapelt, und der Applikator ist im Verpackungszustand auf dem Stapel von Felgenschutzfilmen angeordnet, und die Felgenschutzfilme und der Applikator sind zusammen verpackt. Insbesondere sind sie in einer Verpackung angeordnet oder in einer Schweißfolie verschweißt.

In einer besonders bevorzugten Ausführungsform der Erfindung ist eine Kontur der Auflagefläche einer Kontur eines bestimmten Felgentyps angepasst. Unter Kontur ist hier ein Höhenprofil zu verstehen. Damit der Felgenschutzfilm mittels des Applikator möglichst fest außen auf die Felge aufgeklebt werden kann, ist es vorteilhaft, dass der Felgenschutzfilm möglichst großflächig, d. h. an vielen Stellen der Felge mit Druck auf die Felge aufgedrückt werden kann. Da die Felgen eine Vielzahl an Felgentypen umfassen, ist es bevorzugt vorgesehen, den Applikator mit seiner Kontur auf den jeweiligen Felgentyp anzupassen, und zwar so, dass bei richtiger Positionierung des Applikators relativ zur Felge der Felgenschutzfilm möglichst großflächig auf die Felge aufgedrückt werden kann.

In ihrem zweiten Aspekt wird die Aufgabe durch ein Verfahren mit den Merkmalen des Anspruchs 10 gelöst.

Zunächst wird eine Verpackung eines Felgenschutzapplikationssets mit einer Vielzahl an übereinandergestapelten Felgenschutzfilmen und einem Applikator in einem Verpackungszustand geöffnet. Der Applikator wird in einen Applizierzustand aufgeklappt, und der Applikator wird dann im Applizierzustand auf den obersten Felgenschutzfilm des Stapels aufgedrückt. Vorzugsweise wird von wenigstens einer Klebfläche entlang eines zweiten Außenumfangs der Auflagefläche wenigstens eine zweite Schutzfolie abgezogen, bevor der Applikator auf den Felgenschutzfilm aufgedrückt wird. Danach wird der oberste Felgenschutzfilm des Stapels mittels des Applikators abgehoben und der Felgenschutzfilm mithilfe des Applikators auf eine Felge aufgeklebt und der Applikator nach dem Aufkleben des Felgenschutzfilms von dem Felgenschutzfilm gelöst.

Vorzugsweise wird vor dem Aufkleben des Felgenschutzfilms eine erste Schutzfolie von einer Klebseite des Felgenschutzfilms abgezogen.

Vorzugsweise sind die Klebkräfte derart bestimmt, dass eine Klebkraft zwischen den Klebflächen und dem Felgenschutzfilm geringer ist als eine Klebkraft zwischen dem Felgenschutzfilm und der Felge.

Besonders bevorzugt wird zunächst ein Felgentyp bestimmt, ein dem Felgentyp zugeordnetes Applikationsset bestimmt und ein daraus entnommener bestimmter Felgenschutzfilm auf eine Felge des bestimmten Felgentyps geklebt. Die Felgenschutzapplikationssets sind in dieser Ausführungsform der Erfindung einem bestimmten Felgentyp zugeordnet. Zum einen ist eine Außenkontur des Applikators, insbesondere der Auflagefläche des Applikators, einer Außenkontur der Felge angepasst, vorzugsweise sind beide entlang der Kontaktbereiche komplementär zueinander ausgebildet, zum anderen kann der Applikator Öffnungen aufweisen, und/oder der bestimmte Felgenschutzfilm kann Löcher und Öffnungen aufweisen, die den Löchern und Öffnungen der Felge, insbesondere denen die zum Einbringen von Radmuttern in die Felge vorgesehen sind, angepasst sind. Somit kann das Rad auch bei bereits aufgebrachtem Felgenschutzfilm noch an ein Kraftfahrzeug montiert werden, da die Radmuttern durch die Löcher des Felgenschutzfilms in der Felge vorgesehene Kanäle für die Radmuttern eingebracht werden können.

Die Erfindung wird anhand zweier Ausführungsbeispiele in neun Figuren beschrieben. Dabei zeigen:
- Fig. 1: eine Draufsicht eines erfindungsgemäßen Applikators,
- Fig. 2: den Applikator in Fig. 1 in einem Applizierzustand,
- Fig. 3: den Applikator in Fig. 1 in einer Unteransicht,
- Fig. 4: eine seitliche Ansicht eines erfindungsgemäßen Felgenschutzfilmapplikationssets mit einem Stapel an Felgenschutzfilmen und einem Applikator in einem Verpackungszustand,
- Fig. 5: den Applikator im Applizierzustand nach dem Abheben eines obersten Felgenschutzfilmes und teilweise abgezogener zweiter Schutzfolie von der Klebschicht des Felgenschutzfilmes,
- Fig. 6: einen auf eine Felge aufgeklebten Felgenschutzfilm,

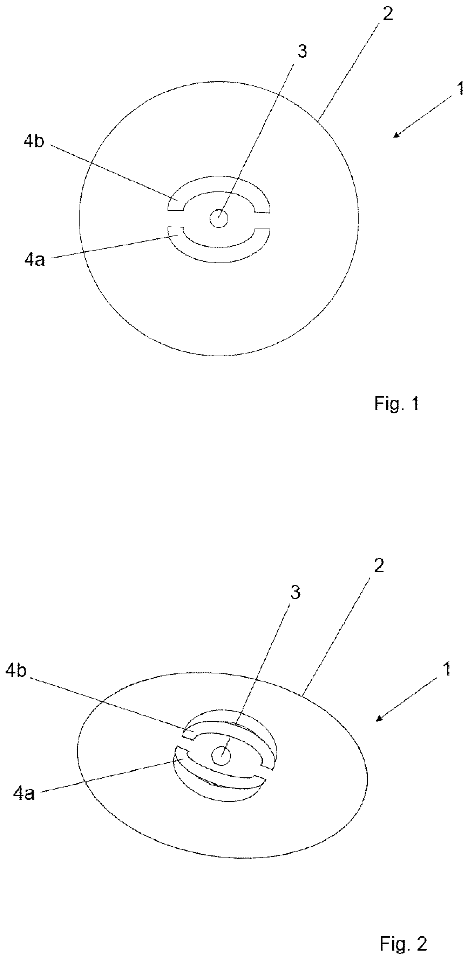

Ein in Fig. 1 in einer Draufsicht dargestellte Applikator 1 ist in einem Verpackungszustand dargestellt. Der Applikator 1 besteht im Verpackungszustand aus einem scheibenförmigen Schnittmuster. Unter einem Schnittmuster ist hier ein ausgeschnittenes oder ausgestanztes, scheibenförmiges, vorzugsweise einstückiges Element zu verstehen mit einer Ausdehnung in einer Scheibenebene, die um ein Vielfaches größer ist als eine Ausdehnung senkrecht dazu entlang einer Höhe. Der Applikator 1 kann aus einem Wellpappebogen oder auch aus dünnen Kunststoffplatten, insbesondere Kunststoffdoppelstegplatten ausgeschnitten, ausgestanzt oder Ähnliches sein.

Im vorliegenden Beispiel besteht der Applikator 1 im Verpackungszustand aus einem Schnittmuster, das aus einer dünnen, d. h. etwa 0,5 cm dicken Doppelstegplatte ausgestanzt ist. Der Applikator 1 weist einen zweiten Außenumfang 2 auf. Der zweite Außenumfang 2 ist kreisförmig. Ein Mittelpunkt des kreisförmigen, scheibenförmigen Applikators 1 weist ein konzentrisch zum zweiten Außenumfang 2 angeordnetes kreisförmiges Loch 3 auf. Spiegelsymmetrisch und konzentrisch um das Loch 3 sind zwei klappbare Griffe 4a, 4b aus dem Schnittmuster ausgeschnitten. Das Schnittmuster ist so gestaltet, dass der Applikator 1 vollständig aus dem Schnittmuster besteht und aus dem in Fig. 1 dargestellten Verpackungszustand in einen in Fig. 2 dargestellten Applizierzustand durch einfaches Hochklappen der zwei Griffe 4a, 4b überführt werden kann. Die beiden Griffe 4a, 4b können symmetrisch zum Loch 3 aufeinander zu geklappt werden und somit zusammen einen gemeinsamen Griff ausbilden, der es gestattet, den Applikator 1 in dem Applizierzustand mit einer Hand durch einen Benutzer zu führen und zu benutzen.

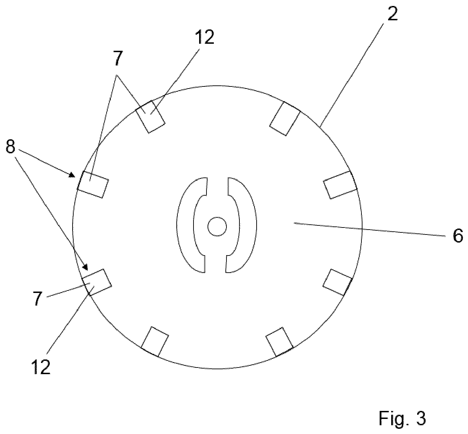

Fig. 3 zeigt eine Unterseite des Applikators 1 in Fig. 2. Die beiden Griffe 4a, 4b sind im Applizierzustand aus der Ebene des scheibenförmigen Schnittmusters herausgeklappt. Auf der in Fig. 3 flächig zu sehenden Auflagefläche 6 des Applikators 1 sind den zweiten Außenumfang 2 entlang laufend acht Klebflächen 7 vorgesehen. Die Klebflächen 7 sind relativ positionsfest zur Auflagefläche 6 vorgesehen. In Fig. 3 sind die Klebflächen 7 an einer der Auflagefläche 6 abgewandten Seite eines Schaumstoffstückes 8 aufgebracht. Die Schaumstoffstücke 8 sind mit der der Auflagefläche 6 zugewandten Seite auf die Auflagefläche 6 aufgeklebt. Es ist natürlich auch denkbar, eine andere Anzahl an Schaumstoffstücke 8 und Klebflächen 7 vorzusehen. Es kann eine umlaufende Klebfläche 7 oder jede höher Anzahl an Klebflächen 7 vorgesehen sein. Die Anzahl der Schaumstoffstücke 8 kann gleich oder auch kleiner oder auch größer als die Anzahl der Klebflächen 7 sein.

Der Applikator 1 in den Fig. 1 bis 3 dient zur Aufbringung eines Felgenschutzfilms 9 auf eine Felge 13 eines Kraftfahrzeugs o.Ä.. Derselbe Applikator 1 kann zum nacheinander Aufkleben einer Vielzahl an Felgenschutzfilmen 9 verwendet werden.

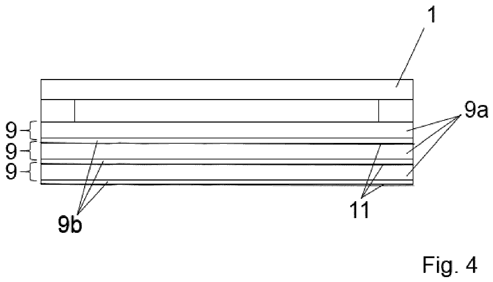

Fig. 4 zeigt ein erfindungsgemäßes Felgenschutzfilmapplikationsset umfassend eine Vielzahl an formgleichen Felgenschutzfilmen 9, die übereinandergestapelt sind, und einen auf dem Stapel an Felgenschutzfilmen 9 angeordneten Applikator 1 im Verpackungszustand. Der Applikator 1 im Verpackungszustand ist zusammengeklappt.

Der Stapel aus der Vielzahl an Felgenschutzfilmen 9 und dem zusammengeklappten Applikator 1 kann einfach und bequem in einer Schachtel oder Schweißfolie verpackt als Set zur Verfügung gestellt und gehandhabt werden. Die formgleichen Felgenschutzfilme 9 weisen jeweils eine Trägerfolie 9a auf, auf deren einer Seite eine Klebschicht 9b aufgebracht ist. Dabei ist die Klebschicht 9b vollflächig entlang der Trägerfolie 9a des Felgenschutzfilms 9 vorgesehen. Die Klebschicht 9b ist in der gestapelten Position gemäß Fig. 1 vorzugsweise mit einer ersten Schutzfolie 11 geschützt. Dadurch ist das Übereinanderstapeln der Felgenschutzfilme 9, ohne dass sie verkleben, problemlos möglich.

Die Klebflächen 7 des Applikators 1 sind im Verpackungszustand jeweils mit einer zweiten Schutzfolie 12 überzogen, so dass der Applikator 1 auch im Verpackungszustand ohne mit ihm zu verkleben auf einen obersten Felgenschutzfilm 9 aufgelegt werden kann.

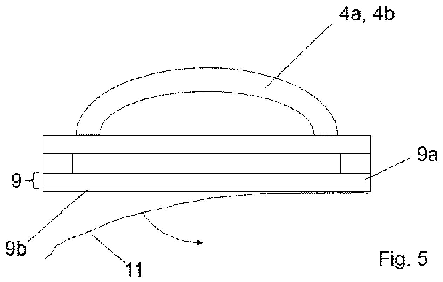

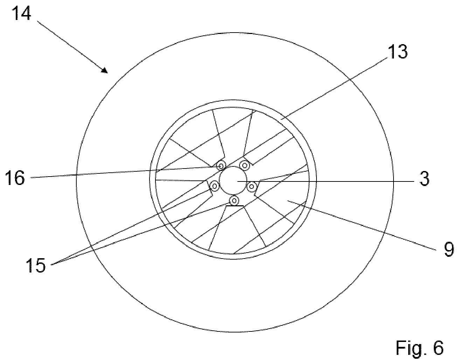

In Fig. 5 ist der Applikator 1 im Applizierzustand dargestellt. Die zweiten Schutzfolien 12 sind bereits von den Klebflächen 7 abgezogen und der Applikator 1 ist auf eine nicht klebende Seite der Trägerfolie 9a des Felgenschutzfilms 9 aufgeklebt worden. Die dem Applikator 1 abgewandte Klebschicht 9b des Felgenschutzfilms 9 ist mit der zweiten Schutzfolie 12 versehen, die in Fig. 5 bereits etwa zur Hälfte abgezogen ist. Nach dem vollständigen Abziehen der zweiten Schutzfolie 12 wird der Felgenschutzfilm 9 mithilfe des Applikators 1 auf eine Felge 13 eines Rads 14 gemäß Fig. 6 aufgeklebt. Der Felgenschutzfilm 9 weist dabei in diesem Beispiel drei weitere Löcher 15 auf, die direkt oberhalb der zum Montieren der Felge 13 vorgesehenen Radmuttern 16 vorgesehen sind. So kann das Rad 14 auch mit bereits aufgebrachtem Felgenschutzfilm 9 immer noch am (nicht dargestellten) Kraftfahrzeug montiert werden.

Die Auflagefläche 6 des Applikators 1 kann eine Kontur aufweisen, d. h. ein Höhenprofil senkrecht zur Scheibenebene der Auflagefläche 6, die komplementär zu einer Kontur der Felge 13 ausgebildet ist. Dadurch ist es möglich, dass der mit dem Applikator 1 von dem Stapel an Felgenschutzfilmen 9 abgehobene oberste Felgenschutzfilm 9 gleichmäßig und großflächig auf die Felge 13 aufgedrückt und aufgeklebt wird.

Das erfindungsgemäße Verfahren zum Aufbringen eines Felgenschutzfilms 9 läuft dabei mit dem Felgenschutzapplikationsset gemäß Fig. 4 wie folgt ab:
Dabei ist vorab zu bedenken, dass jedes Felgenschutzapplikationsset einem bestimmten Felgentyp zugeordnet ist, d. h. zunächst wird der Felgentyp bestimmt und das diesem Felgentyp zugeordnete Felgenschutzapplikationsset herausgesucht und geöffnet.

Dann wird eine Verpackung, die hier nicht dargestellt ist, des Felgenschutzfilmapplikationssets geöffnet. Bei der Verpackung kann es sich um eine Schutzfolie, um eine Pappverpackung o. Ä. handeln. Dadurch werden eine Vielzahl an übereinandergestapelten Felgenschutzfilmen 9 und ein auf dem Stapel von Felgenschutzfilmen 9 obenauf liegender Applikator 1 in jeweils einem Verpackungszustand freigegeben.

Als nächstes wird der Applikator 1, der in dem Stapel das oberste Element ist, von dem Stapel abgehoben und aus dem Verpackungszustand in einen Applizierzustand aufgeklappt. Das Aufklappen ist in der Fig. 2 bereits beschrieben worden. Der Applikator 1 in dem Applizierzustand wird von den zweiten Schutzfolien 12 an den Klebflächen 7 befreit und dann auf den obersten Felgenschutzfilm 9 des Stapels an Felgenschutzfilmen (9) aufgedrückt. Durch Anheben des Applikators 1 kann der oberste Felgenschutzfilm 9 von dem Stapel abgehoben werden. Anschließend wird die erste Schutzfolie 11 des obersten Felgenschutzfilms 9 abgezogen und somit die Klebschicht 9b des Felgenschutzfilms 9 freigegeben. Die Klebschicht 9b erstreckt sich vorzugsweise über die gesamte Seite des Felgenschutzfilms 9. Anschließend wird der Felgenschutzfilm 9 mittels des Applikators 1 richtig zur Felge 13 positioniert. Dazu kann der Applikator 1 ebenfalls beispielsweise Öffnungen (in den Figuren nicht dargestellt) aufweisen, die mit Löchern 15 des Felgenschutzfilms 9 korrespondieren, so dass durch die Löcher des Applikators 1 und die Öffnungen des Felgenschutzfilms 9 hindurch beim Positionieren des Applikators 1, die Radmuttern 16 der Felge 13 sichtbar sind und der Felgenschutzfilm 9 positionsgerecht mit seinen Löchern 15 über den Radmuttern 16 auf der Felge 13 positioniert werden kann.

Die Klebkräfte sind so bemessen, dass eine Klebkraft zwischen Applikator 1 und Felgenschutzfilm 9 kleiner ist als eine Klebkraft zwischen Felge 13 und Klebschicht 9b des Felgenschutzfilms 9. Dadurch kann der Applikator 1 nach dem Aufdrücken des Felgenschutzfilms 9 auf die Felge 13 von dem Felgenschutzfilm 9 wieder abgezogen werden.

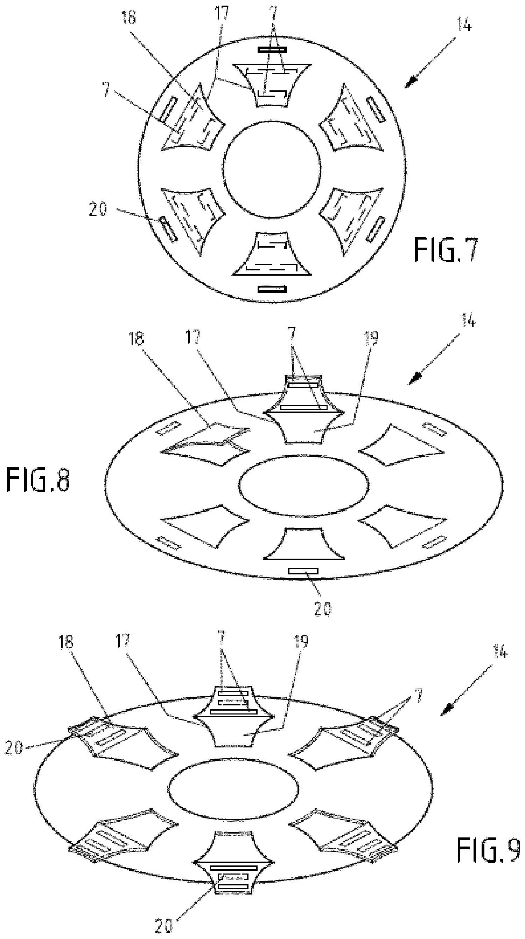

Die Fig. 7 bis Fig. 9 zeigen eine Draufsicht einer Variante eines erfindungsgemäßen Applikators 1 mit vorgestanzten Konturen 17 in der Auflagefläche 6, die umgefaltet und fixiert werden. Dese Variante des Applikators 1 bietet sich insbesondere an, wenn der Applikator 1 aus einer festen Pappe besteht.
In der Fig. 7 ist der Applikator 1 vor Verwendung dargestellt. In der Auflagefläche 6 sind sechs Konturen 17 vorgestanzt. Jede einzelne Kontur 17 zeichnet sich dadurch aus, dass an drei der die Kontur 17 umgebende Kanten die Auflagefläche 6 so geschwächt ist, dass die Kontur 17 aus der Auflagefläche 6 an diesen drei Kanten ausgebrochen werden kann. Die vierte Kante, die in radialer Richtung dem äußeren Rand der Auflagefläche 6 am nächsten kommt, ermöglicht, dass die Kontur 17 um diese Kante gefaltet werden kann.

In der Figur 8 sind zwei der insgesamt sechs Konturen 17 aufgebrochen. Die Klebebandstreifen oder Kleberstreifen 20 auf der Auflagefläche 6 dienen der späteren Fixierung der Auffaltungen 18. An den Stellen, wo die Konturen 17 aufgebrochen und aufgefaltet sind, entstehen in der Auflagefläche 6 Ausstanzungen 19, die frei von Material sind. Weiterhin sind auf den Konturen 17 beziehungsweise Auffaltungen 18 weitere Klebebandstreifen oder Klebeflächen 7 vorhanden, mit denen das zu verspendende Gut fixiert werden kann. Diese Klebebandstreifen 7 können auch nach dem Auffalten der Auffaltung 18 aufgebracht werden.
In Figur 9 ist gezeigt, wie alle Auffaltungen 18, die ebenfalls in Form eines Zifferblattes entlang des Außenumfangs der Auflagefläche 6 angeordnet sind, mittels der Klebebandstreifen 20 auf der Auflagefläche 6 fixiert sind. Auf allen Auffaltungen 18 sind Klebebandstreifen 7 vorgesehen.

### Bezugszeichenliste

- 1: Applikator
- 2: zweiter Außenumfang
- 3: Loch
- 4a: Griff
- 4b: Griff

- 6: Auflagefläche
- 7: Klebfläche
- 8: Schaumstoffstück
- 9: Felgenschutzfilm
- 9a: Trägerfolie
- 9b: Klebschicht

- 11: erste Schutzfolie
- 12: zweite Schutzfolie
- 13: Felge
- 14: Rad
- 15: Löcher
- 16: Radmuttern
- 17: Kontur
- 18: Auffaltung
- 19: Ausstanzung
- 20: Klebebandstreifen

## Patentansprüche

1. Felgenschutzfilmapplikationsset mit
einer übereinandergestapelten Vielzahl an formgleichen Felgenschutzfilmen (9) mit jeweils einem ersten Außenumfang und
einem Applikator (1), der aus einem ebenen Verpackungszustand in einen Applizierzustand aufklappbar ist und in dem Verpackungszustand ein scheibenförmiges Schnittmuster mit einem zweiten Außenumfang (2) ausbildet und im Applizierzustand eine Auflagefläche (6) aufweist, deren zweiter Außenumfang (2) dem ersten Außenumfang des Felgenschutzfilms (9) angepasst ist,
**dadurch gekennzeichnet, dass**
der Applikator im Applizierzustand zumindest einen aus dem Schnittmuster herausgeklappten Griff (4a, 4b) aufweist.

2. Felgenschutzfilmapplikationsset nach Anspruch 1,
**dadurch gekennzeichnet, dass** das scheibenförmige Schnittmuster einen kreisförmigen zweiten Außenumfang (2) aufweist und zwei sich an einem Kreismittelpunkt des Schnittmusters gegenüberliegende, zueinander klappbare Griffe (4a, 4b) aufweist.

3. Felgenschutzfilmapplikationsset nach Anspruch 1 oder 2,
**dadurch gekennzeichnet, dass** die Auflagefläche (6) einen kreisförmigen zweiten Außenumfang (2) aufweist und auf der Auflagefläche (6) entlang des zweiten Außenumfangs (2) wenigstens eine Klebfläche (7) angeordnet ist.

4. Felgenschutzfilmapplikationsset nach einem der Ansprüche 1, 2 oder 3,
**dadurch gekennzeichnet, dass** entlang des zweiten Außenumfangs (2) eine Vielzahl an Klebflächen (7) angeordnet ist.

5. Felgenschutzfilmapplikationsset nach Anspruch 3 oder 4,
**dadurch gekennzeichnet, dass** die wenigstens eine Klebfläche (7) außen an einem Schaumstoffstück (8) angeordnet ist, das auf die Auflagefläche (6) aufgebracht ist.

6. Felgenschutzfilmapplikationsset nach einem der vorstehenden Ansprüche,
**dadurch gekennzeichnet, dass** die Felgenschutzfilme (9) einen kreisförmigen ersten Außenumfang aufweisen und eine Klebschicht (9b) aufweisen, die jeweils von einer ersten Schutzfolie (11) abgedeckt ist, wenn die Felgenschutzfilme (9) übereinandergestapelt sind.

7. Felgenschutzfilmapplikationsset nach einem der vorstehenden Ansprüche,
**dadurch gekennzeichnet, dass** die Felgenschutzfilme (9) im Verpackungszustand übereinandergestapelt sind und der Applikator (1) im Verpackungszustand auf dem Stapel von Felgenschutzfilmen (9) angeordnet ist und die Felgenschutzfilme (9) und der Applikator (1) zusammen verpackt sind.

8. Felgenschutzfilmapplikationsset nach einem der vorstehenden Ansprüche,
**dadurch gekennzeichnet, dass** der erste und der zweite Außenumfang (2) gleich sind.

9. Felgenschutzfilmapplikationsset nach einem der vorstehenden Ansprüche,
**dadurch gekennzeichnet, dass** eine Kontur der Auflagefläche (6) einer Kontur eines bestimmten Felgentyps angepasst ist.

10. Verfahren zum Aufbringen eines Felgenschutzfilms (9) auf eine Felge (13), indem eine Verpackung eines Felgenschutzfilmapplikationssets mit einer Vielzahl an übereinandergestapelten Felgenschutzfilmen (9) und einem Applikator (1) in einem Verpackungszustand geöffnet wird,
der Applikator (1) in einen Applizierzustand aufgeklappt wird,
mit dem Applikator (1) in dem Applizierzustand auf einen obersten Felgenschutzfilm (9) des Stapels aufgedrückt wird,
der oberste Felgenschutzfilm (9) des Stapels abgehoben wird,
der Felgenschutzfilm (9) mithilfe des Applikators (1) auf eine Felge (13) aufgeklebt wird,
der Applikator (1) nach dem Aufkleben des Felgenschutzfilms (9) von dem Felgenschutzfilm (9) gelöst wird,
**dadurch gekennzeichnet, dass**
der Applikator (1) aus einem scheibenförmigen Schnittmuster in dem Verpackungszustand durch Herausklappen wenigstens eines Griffes (4a) aus einer Ebene des Schnittmusters in den Applizierzustand geklappt wird.

11. Verfahren nach Anspruch 10,
**dadurch gekennzeichnet, dass**
von wenigstens einer Klebfläche (7) entlang eines zweiten Außenumfangs (2) der Auflagefläche (6) jeweils wenigstens eine zweite Schutzfolie (12) abgezogen wird.

12. Verfahren nach Anspruch 10 bis 11,
**dadurch gekennzeichnet, dass** von dem obersten Felgenschutzfilm (9) eine erste Schutzfolie (11) abgezogen wird.

13. Verfahren nach einem der Ansprüche 10 bis 12,
**dadurch gekennzeichnet, dass** ein Felgentyp bestimmt wird, ein dem Felgentyp zugeordnetes Felgenschutzfilmapplikationsset bestimmt wird, eine daraus entnommener bestimmter Felgenschutzfilm (9) auf eine Felge (13) des bestimmten Felgentyps geklebt wird.

## Claims

1. Rim protection film application set having,
a multiplicity of rim protection films (9) of identical shape, which are stacked on top of one another and have in each case a first external circumference, and
an applicator (1) which is capable of being unfolded from a planar packaged state to an application state and in the packaged state configures a disc-shaped cutting pattern having a second external circumference (2) and in the application state has a bearing face (6), the second external circumference (2) thereof being adapted to the first external circumference of the rim protection film (9),
**characterized in that**
the applicator in the application state has at least one grip (4a, 4b) that is folded out from the cutting pattern.

2. Rim protection application set according to Claim 1,
**characterized in that** the disc-shaped cutting pattern has a circular second external circumference (2) and at a centre of the circle of the cutting pattern has two mutually opposite grips (4a, 4b) that are foldable towards one another.

3. Rim protection film application set according to Claim 1 or 2, **characterized in that** the bearing face (6) has a circular second external circumference (2), and at least one adhesive face (7) is disposed on the bearing face (6) along the second external circumference (2).

4. Rim protection film application set according to one of Claims 1, 2, or 3, **characterized in that** a multiplicity of adhesive faces (7) are disposed along the second external circumference (2).

5. Rim protection film application set according to Claim 3 or 4, **characterized in that** the at least one adhesive face (7) is disposed on the outside on a foam material piece (8) which is attached to the bearing face (6).

6. Rim protection film application set according to one of the preceding claims, **characterized in that** the rim protection films (9) have a circular first external circumference and have an adhesive layer (9b) which is in each case covered by a first protective film (11) when the rim protection films (9) are stacked on top of one another.

7. Rim protection film application set according to one of the preceding claims,
**characterized in that** the rim protection films (9) in the packaged state are stacked on top of one another, and the applicator (1) in the packaged state is disposed on the stack of rim protection films (9), and the rim protection films (9) and the applicator (1) are conjointly packaged.

8. Rim protection film application set according to one of the preceding claims,
**characterized in that** the first and the second external circumference (2) are identical.

9. Rim protection film application set according to one of the preceding claims,
**characterized in that** a contour of the bearing face (6) is adapted to a contour of a specific rim type.

10. Method for attaching a rim protection film (9) to a rim (13), in which method a packaging of a rim protection film application set having a multiplicity of rim protection films (9) stacked on top of one another and an applicator (1) in a packaged state is opened,
the applicator (1) is folded out to an application state,
using the applicator (1) in the application state, pressure is exerted on an upper most rim protection film (9) of the stack,
the uppermost rim protection film (9) of the stack is lifted,
the rim protection film (9) with the aid of the applicator (1) is adhesively bonded to a rim (13), the applicator (1) after the adhesive bonding of the rim protection film (9) is released from the rim protection film (9),
**characterized in that**
the applicator (1) is folded from a disc-shaped cutting pattern in the packaged state to the application state by folding out at least one grip (4a) from a plane of the cutting pattern.

11. Method according to Claim 10,
**characterized in that**
at least one second protective film (12) is in each case torn away from at least one adhesive face (7) along a second external circumference (2) of the bearing face (6).

12. Method according to Claims 10 to 11,
**characterized in that** a first protective film (11) is torn away from the uppermost rim protection film (9) .

13. Method according to one of Claims 10 to 12,
**characterized in that** a rim type is specified, a rim protection film application set assigned to the rim type is specified, a specific rim protection film (9) retrieved from said rim protection film application set is adhesively bonded to a rim (13) of the specific rim type.

## Revendications

1. Ensemble d'application de film de protection de jante comprenant
une pluralité de films de protection de jante (9) de forme identique empilés, lesquels présentent respectivement une première périphérie extérieure, et
un applicateur (1) qui peut être rabattu d'un état d'emballage plan à un état d'application et forme, dans l'état d'emballage, un patron en forme de disque présentant une deuxième périphérie extérieure (2) et, dans l'état d'application, une surface d'appui (6) dont la deuxième périphérie extérieure (2) est adaptée à la première périphérie extérieure du film de protection de jante (9), **caractérisé en ce que**
l'applicateur comprend, dans l'état d'application, au moins un élément de préhension (4a, 4b) rabattu hors du patron.

2. Ensemble d'application de film de protection de jante selon la revendication 1,
**caractérisé en ce que** le patron en forme de disque présente une deuxième périphérie extérieure (2) circulaire et deux éléments de préhension (4a, 4b) pouvant être rabattus l'un par rapport à l'autre et se faisant face en un centre du patron.

3. Ensemble d'application de film de protection de jante selon la revendication 1 ou 2,
**caractérisé en ce que** la surface d'appui (6) présente une deuxième périphérie extérieure (2) circulaire, et au moins une surface adhésive (7) est disposée sur la surface d'appui (6) le long de la deuxième périphérie extérieure (2).

4. Ensemble d'application de film de protection de jante selon l'une quelconque des revendications 1, 2 et 3,
**caractérisé en ce qu'**une pluralité de surfaces adhésives (7) est disposée le long de la deuxième périphérie extérieure (2).

5. Ensemble d'application de film de protection de jante selon la revendication 3 ou 4,
**caractérisé en ce que** ladite au moins une surface adhésive (7) est disposée à l'extérieur sur un morceau de mousse (8) qui est appliqué sur la surface d'appui (6).

6. Ensemble d'application de film de protection de jante selon l'une quelconque des revendications précédentes,
**caractérisé en ce que** les films de protection de jante (9) présentent une première périphérie extérieure circulaire et comprennent une couche adhésive (9b) qui est recouverte respectivement par un premier film de protection (11) lorsque les films de protection de jante (9) sont empilés.

7. Ensemble d'application de film de protection de jante selon l'une quelconque des revendications précédentes,
**caractérisé en ce que** les films de protection de jante (9) sont empilés dans l'état d'emballage et l'applicateur (1) est disposé sur la pile de films de protection de jante (9) dans l'état d'emballage, et les films de protection de jante (9) et l'applicateur (1) sont emballés ensemble.

8. Ensemble d'application de film de protection de jante selon l'une quelconque des revendications précédentes,
**caractérisé en ce que** la première et la deuxième périphérie extérieure (2) sont identiques.

9. Ensemble d'application de film de protection de jante selon l'une quelconque des revendications précédentes,
**caractérisé en ce qu'**un contour de la surface d'appui (6) est adapté à un contour d'un type de jante déterminé.

10. Procédé d'application d'un film de protection de jante (9) sur une jante (13), selon lequel un emballage d'un ensemble d'application de film de protection de jante comprenant une pluralité de films de protection de jante (9) empilés et un applicateur (1) dans un état d'emballage est ouvert, l'applicateur (1) est rabattu dans un état d'application,
avec l'applicateur (1) dans l'état d'application, on appuie sur le film de protection de jante (9) le plus élevé,
le film de protection de jante (9) le plus élevé de la pile est retiré,
le film de protection de jante (9) est collé sur une jante (13) à l'aide de l'applicateur (1), l'applicateur (1) est détaché du film de protection de jante (9) après le collage du film de protection de jante (9),
**caractérisé en ce que**
l'applicateur (1) est rabattu à partir d'un patron en forme de disque dans l'état d'emballage par rabattement d'au moins un élément de préhension (4a) hors d'un plan du patron dans l'état d'application.

11. Procédé selon la revendication 10,
**caractérisé en ce que**
respectivement au moins un deuxième film de protection (12) est retiré d'au moins une surface adhésive (7) le long d'une deuxième périphérie extérieure (2) de la surface d'appui (6).

12. Procédé selon les revendications 10 et 11,
**caractérisé en ce qu'**un premier film de protection (11) est retiré du film de protection de jante (9) le plus élevé.

13. Procédé selon l'une quelconque des revendications 10 à 12,
**caractérisé en ce qu'**un type de jante est déterminé, un ensemble d'application de film de protection de jante associé au type de jante est déterminé, et un film de protection de jante (9) déterminé enlevé de cet ensemble est collé sur une jante (13) du type déterminé.
